# FASCICULE DE BREVET EUROPEEN

(11) **EP 3 083 302 B1**
(45) Date de publication et mention de la délivrance du brevet: **18.09.2019**
(21) Numéro de dépôt: 14830824.0
(22) Date de dépôt: 18.12.2014
(51) Int. Cl.: B60K 1/00, B60K 6/10, B60K 6/445, F16H 3/66

(54) **SYSTÈME ÉLECTROMÉCANIQUE DE RÉCUPÉRATION D'ÉNERGIE CINÉTIQUE**
ELEKTROMECHANISCHES SYSTEM ZUR RÜCKGEWINNUNG KINETISCHER ENERGIE
ELECTROMECHANICAL SYSTEM FOR RECOVERING KINETIC ENERGY

(30) Priorité: 19.12.2013 FR 1363065
(43) Date de publication de la demande: 26.10.2016
(73) Titulaire: Valeo Systèmes de Contrôle Moteur, 95800 Cergy Saint Christophe (FR)
(72) Inventeur: ANGELOT, Pierre-Julian, 78500 Sartrouville (FR)
(74) Mandataire: Garcia, Christine
(86) Numéro de dépôt international: PCT/FR2014/053422
(87) Numéro de publication internationale: WO 2015/092294

(56) Documents cités:
- EP-A2- 2 319 718
- WO-A1-2008/099055
- WO-A1-2011/145937
- DE-A1- 10 162 878
- DE-A1-102004 047 967
- FR-A- 929 571
- US-A1- 2005 252 305
- US-A1- 2012 309 575

## Description

La présente invention concerne les systèmes électromécaniques de récupération d'énergie cinétique pour véhicules, notamment automobiles.

US 2012/0309575 décrit un système électromécanique de récupération d'énergie cinétique pour véhicule. FR 2 967 619 divulgue un véhicule hybride comportant un système de récupération d'énergie cinétique à deux trains épicycloïdaux de raisons différentes, entraînés en parallèle respectivement par le moteur thermique et le moteur électrique du véhicule. Un système permet de coupler sélectivement l'un de ces trains à une génératrice électrique.

WO 2010/059041 A1 décrit un système de récupération d'énergie cinétique comportant un volant d'inertie, un train épicycloïdal et une machine électrique réversible moteur/générateur.

US 4 423 794 décrit un système similaire.

Il existe un besoin pour perfectionner les systèmes électromécaniques de récupération d'énergie cinétique du type comportant un volant d'inertie, une machine électrique réversible moteur / générateur, en particulier dans le but d'optimiser les flux de puissance, réduire le dimensionnement des composants électriques, augmenter le rendement et/ou réduire le coût global.

L'invention vise à répondre à tout ou partie de ce besoin et elle y parvient grâce à un système de récupération d'énergie cinétique électromécanique pour véhicule, comportant :
- une première liaison mécanique vers les roues du véhicule,
- une deuxième liaison mécanique vers un volant d'inertie,
- une troisième liaison mécanique vers une machine électrique réversible moteur/générateur,
- au moins deux trains épicycloïdaux de raisons différentes, dont les planétaires, couronnes et porte satellites sont sélectivement connectés auxdites liaisons par un système de couplage, en fonction des flux de puissance entre les roues du véhicule, le volant d'inertie et la machine électrique.

Le système comporte également un élément de stockage d'énergie électrique, tel qu'une batterie par exemple.

L'invention permet de diminuer la contribution électrique nécessaire au fonctionnement du système, ce qui permet de réduire le dimensionnement des composants électriques, d'augmenter le rendement global et de réduire le coût du système.

En modifiant la raison du train épicycloïdal actif, en passant d'un train à un autre, l'invention permet de modifier les flux de puissance et les énergies transférées. La possibilité de choisir la valeur de la raison du train épicycloïdal actif permet de satisfaire au mieux au compromis entre la minimisation de la puissance électrique requise, donnée par la taille de la machine électrique, et la minimisation de la variation d'énergie électrique requise, donnée par la taille de l'élément de stockage électrique.

La machine électrique réversible peut être deux quadrants, mais de préférence elle est quatre quadrants.

De préférence, le système comporte au moins trois trains épicycloïdaux de raisons différentes.

Les raisons peuvent suivre une progression arithmétique, géométrique ou arithmético-géométrique, selon le critère de dimensionnement choisi, puissance ou énergie.

Le volant peut être connecté au planétaire des trains épicycloïdaux, et la sortie du système au porte satellites. En variante, le volant peut être connecté à la couronne des trains épicycloïdaux, et la sortie du système au porte satellites.

Le système de couplage est de préférence disposé entre la machine électrique et les trains épicycloïdaux, afin de réduire l'inertie à synchroniser et de pouvoir filtrer la synchronisation grâce à la machine électrique.

Le système de couplage peut être réalisé de façon à inverser, lors du passage d'un train précédemment sélectionné à un autre train nouvellement sélectionné, la vitesse de rotation de la connexion vers la machine électrique. Cela permet, en utilisant une machine quatre quadrants, de faciliter les phases de synchronisation.

Le système peut comporter au moins deux trains épicycloïdaux, de préférence au moins trois, le passage d'un train à l'autre s'accompagnant d'un changement de signe du couple exercé par la machine électrique.

L'invention a encore pour objet un véhicule automobile équipé d'un système selon l'invention.

L'invention a encore pour objet un procédé de fourniture d'énergie aux roues d'un véhicule, utilisant un système selon l'invention, dans lequel, successivement :
a) l'énergie cinétique du volant est déchargée pour générer un flux de puissance à la fois vers les roues et vers la machine électrique, qui fonctionne en génératrice,
b) l'énergie cinétique du volant est déchargée vers les roues, et une énergie d'appoint est fournie par la machine électrique, qui fonctionne en moteur,
c) la raison du train épicycloïdal est modifiée en agissant sur le système de couplage,
d) l'énergie cinétique du volant est déchargée pour générer un flux de puissance à la fois vers les roues et vers la machine électrique, qui fonctionne en génératrice, et
e) l'énergie cinétique du volant est déchargée vers les roues, et une énergie d'appoint est fournie par la machine électrique, qui fonctionne en moteur.

Entre les étapes b) et c) le couple de la machine électrique peut être inversé par voie électronique.

Les étapes a) à e) peuvent être répétées, avec à chaque fois entre les étapes b) et c) un changement du couple de la machine par voie électronique.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente, de façon schématique, un exemple de système électromécanique de récupération d'énergie cinétique selon l'invention,
- la figure 2 est une vue analogue à la figure 1, d'une variante de réalisation,
- les figures 3A à 3D représentent les flux de puissance pour différentes conditions de fonctionnement du système de la figure 1,
- les figures 4A à 4D représentent l'évolution du taux de puissance mécanique dans les configurations des figures 3A à 3D respectivement,
- les figures 5 et 7 illustrent les points de fonctionnement de la machine électrique lors de la décharge du volant respectivement pour deux trains épicycloïdaux et pour trois trains épicycloïdaux avec renversement de la vitesse,
- la figure 6 est une vue analogue à la figure 1 d'une variante de réalisation du système de récupération d'énergie cinétique selon l'invention.

Sur les figures, la représentation cinématique du système électromécanique n'est que schématique et les liaisons peuvent être réalisées avec plus de pignons ou autrement, par exemple avec des chaînes ou courroies. Par conséquent, tous les exemples illustrés valent pour des liaisons réalisées de toutes les manières usuelles, avec trains d'engrenages, poulies et courroies, chaînes, friction, denté ...

Dans la suite, on définit par k_{cvt} le rapport d'ouverture donnée par le ratio w_{fly}/wₒᵤₜ, où w_{fly} est la vitesse de rotation du volant d'inertie et wₒᵤₜ la vitesse de rotation de la sortie du train, vers les roues.

Le taux de puissance électrique σ_{Pelec} est donné par σ_{Pelec} = -Pₑₘ/Pₒᵤₜ = 1 - (1/(1-λ) ^{∗} k_{cvt}) et σ_{Eelec} = Δ_{Eelec}/Δ_{Eflytot} = ½ ^{∗} (w_{fly max} - W^{∗}_{fly min})^2 / (W²_{flymax} - W²_{fly min}), OÙ w_{fly max} est la vitesse de rotation maximale du volant d'inertie, w_{fly min} sa vitesse de rotation minimale, en fin de décharge de l'énergie cinétique, Pₑₘ la puissance de la machine électrique, Pₒᵤₜ la puissance de sortie vers les roues, ΔE_{elec} la variation de l'énergie électrique, et ΔE_{fly} la variation de l'énergie cinétique de rotation du volant. w^{∗}_{fly min} désigne la vitesse de synchronisation.

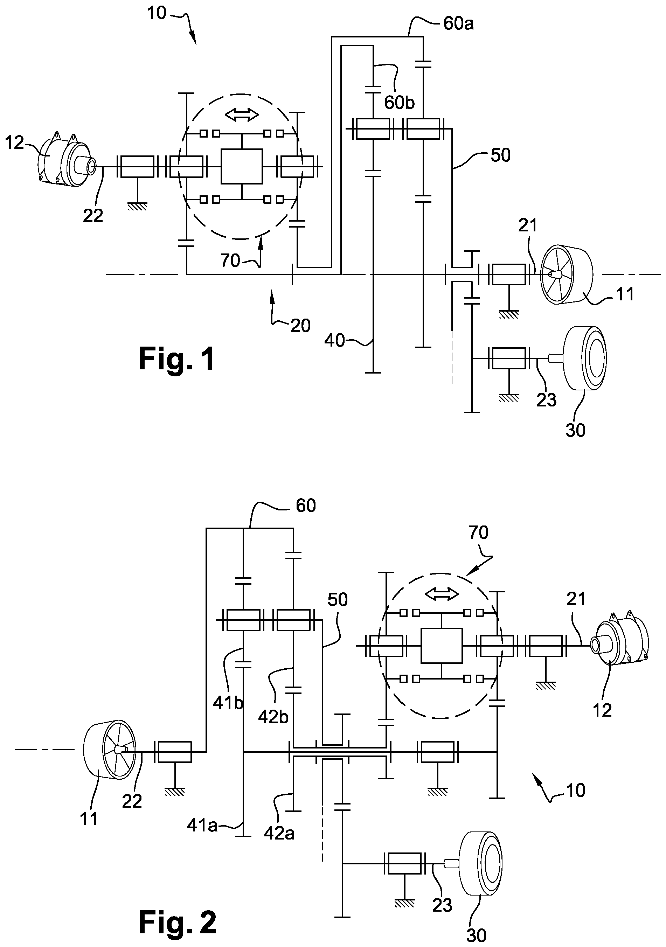

Le système 10 de récupération d'énergie cinétique selon l'invention, représenté à la figure 1, comporte un volant d'inertie 11, une machine électrique 12 moteur/générateur, et un système 20 à trains épicycloïdaux multiples, ayant des entrées/sorties 21, 22 et 23 respectivement vers le volant d'inertie 11, la machine électrique 12 et les roues 30 du véhicule.

Dans l'exemple de la figure 1, le planétaire 40 est relié au volant, le porte-satellites 50 aux roues 30 et les couronnes 60a et 60b à un système de couplage 70 qui permet de connecter sélectivement les couronnes 60a ou 60b à la machine électrique 12.

Dans la variante de la figure 2, le porte-satellites 50 est toujours relié aux roues via l'entrée/sortie 23.

Le système 20 comporte deux planétaires 41a, 42a qui peuvent être sélectivement reliés à la machine électrique 12 via un système de couplage 70. Le système 20 comporte également une couronne 60 qui engraine avec les satellites 41b et 42b, respectivement en prise sur les planétaires 41a et 42a.

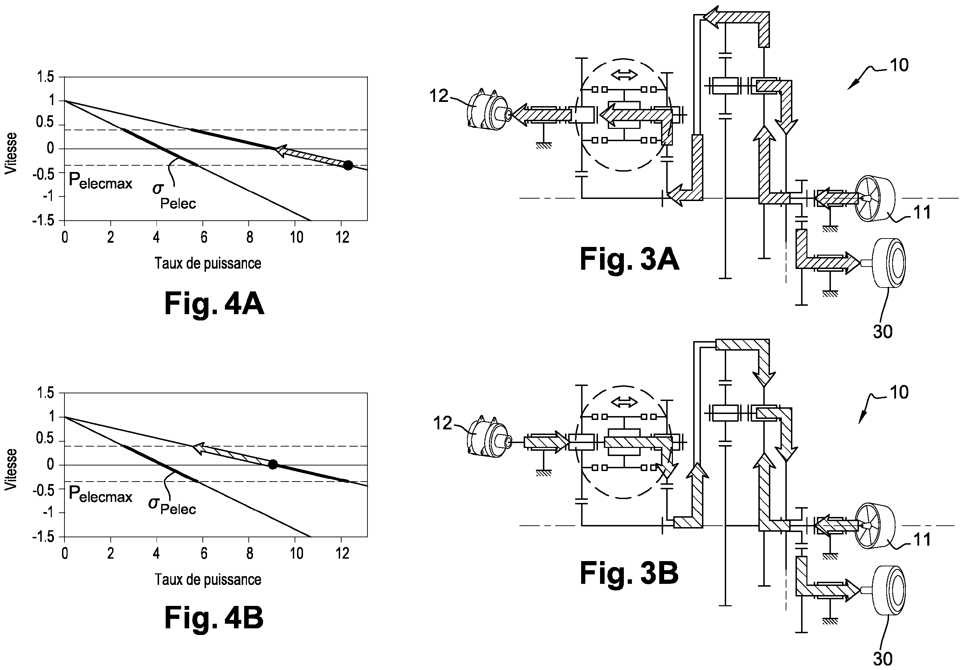

On va maintenant décrire, en se référant aux figures 3A à 3D, les différents flux de puissance lors du fonctionnement du système de la figure 1.

Dans la configuration de la figure 3A, le volant 11 se décharge dans le système pour entraîner les roues et la machine 12 qui peut fonctionner en générateur pour recharger l'élément de stockage électrique. Si l'on se reporte à la figure 4A, on voit que la machine électrique peut fonctionner en générateur sur la plage de puissance-P_{elec max} et 0.

Une fois la valeur 0 franchie, la machine fonctionne en moteur et fournit une énergie mécanique d'appoint, comme illustré aux figures 3B et 4B, jusqu'à ce que la puissance fournie atteigne P_{elec max}.

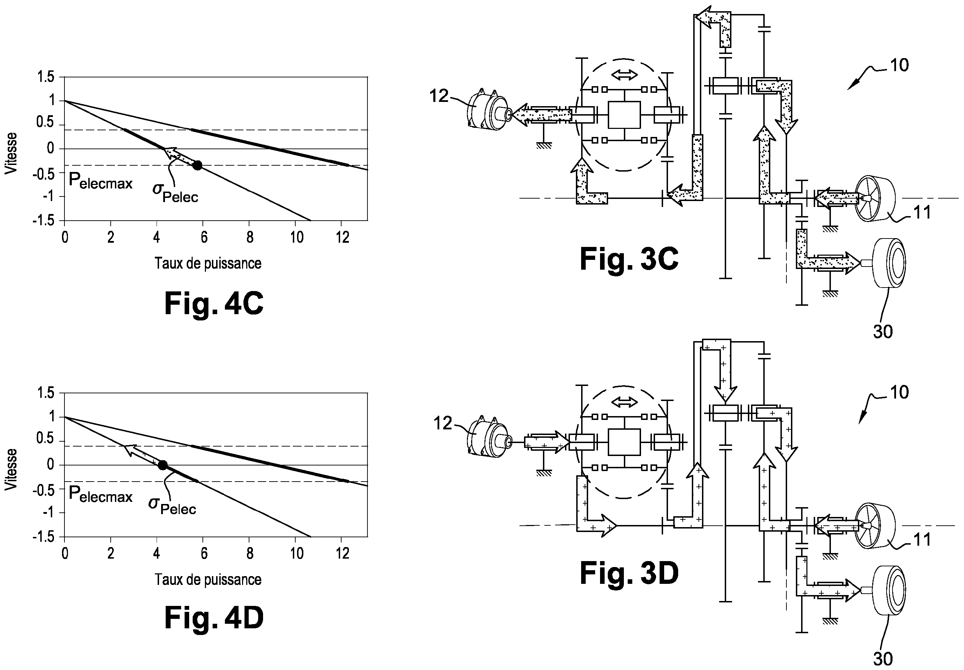

Pour poursuivre la décharge du volant d'inertie 11, on change de train de raison plus faible, ce qui modifie la raison et permet de fonctionner à nouveau sur une plage de puissance allant de -P_{elec max} et 0, où la machine électrique fonctionne en générateur, comme illustré sur les figures 3C et 4C.

Une fois la puissance redevenue positive, comme illustré aux figures 3D et 4D, la machine 12 redevient motrice pour fournir l'appoint d'énergie nécessaire.

On comprend à l'examen des figures 3A à 3D et 4A à 4D que l'on n'a pas besoin, grâce à l'invention, d'augmenter la valeur de la puissance maximale de la machine P_{elec max} pour augmenter le taux de décharge du volant 11.

Dans l'exemple qui vient d'être décrit, lors du changement de train épicycloïdal, bien que les vitesses imposées aux trains par le volant et les roues restent les mêmes, la troisième vitesse doit se synchroniser d'un train à l'autre. Cette vitesse est directement liée à celle de la machine électrique.

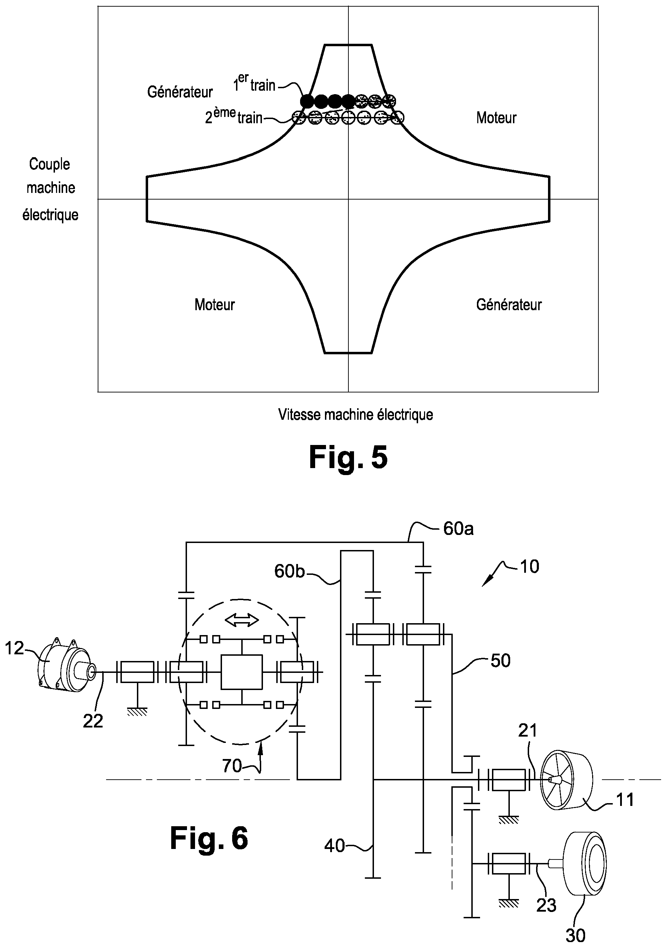

Si l'on se réfère à la figure 5, on voit que lors du passage de la configuration de la figure 3A à celle de la figure 3B, la machine passe sur le premier train de générateur avec vitesse négative à moteur avec vitesse positive, puis au passage du deuxième train la machine repasse en générateur avec un couple plus faible mais une vitesse plus élevée.

De préférence, pour limiter les phases de synchronisation lors des changements de trains, on agence le système 10 pour renverser la vitesse de rotation entre la connexion du train et la machine électrique entre deux rapports, comme illustré à la figure 6.

Le système représenté sur cette figure est une variante de celui décrit précédemment en référence à la figure 1, qui en diffère par le fait que les couronnes 60a et 60b viennent en prise sur des pignons agencés pour inverser le sens de rotation de l'entrée / sortie 22 reliée à la machine électrique 12.

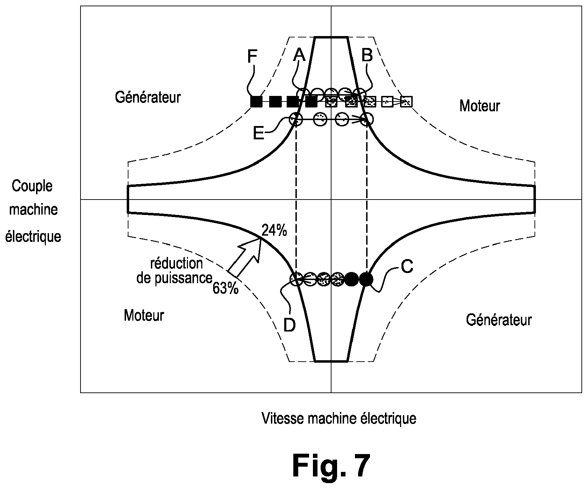

Lorsque le système comporte trois trains, disposés de façon similaire à la figure 6, il est possible de faire en sorte que le renversement de la vitesse se caractérise par une rotation sur les quadrants de la machine électrique, comme illustré à la figure 7.

Après que la machine soit passée de générateur avec une vitesse négative et un couple positif (point A) à moteur avec une vitesse positive et un couple positif (point B), lors de la décharge du volant, cette dernière peut se poursuivre en changeant de train épicycloïdal, ce qui impose un flux négatif, grâce au changement du signe du couple, avec une faible variation de vitesse (point C). Puis la machine peut progressivement changer de sens de rotation (point D). Ensuite, on peut, avec une faible variation de la vitesse, inverser de nouveau le couple pour atteindre un point de fonctionnement (point E) où la vitesse est plus grande en valeur absolue mais le couple plus faible, et ainsi de suite.

Sur la figure 7, on a également représenté en pointillés les points de fonctionnement F d'un système à train épicycloïdal unique, pour comparaison. On peut noter une diminution de la puissance électrique nécessaire entre une configuration connue à un seul train et une configuration selon l'invention à trois trains avec renversement de la vitesse.

L'invention n'est pas limitée aux exemples illustrés. En particulier, il est possible de relier les entrées/sorties des trains de diverses façons.

Par exemple, le planétaire peut être relié aux roues, et dans ce cas soit le volant au porte satellites et la couronne à la machine électrique, soit la machine électrique au porte satellites et la couronne au volant.

Dans une variante, la sortie vers les roues est reliée à la couronne. Dans ce cas, le volant peut être relié au porte satellites et la machine électrique au planétaire, ou en variante la machine électrique au porte satellites et le volant au planétaire.

Dans une autre variante, la sortie vers les roues est reliée au porte satellites. Dans ce cas, le planétaire peut être relié au volant et la machine électrique à la couronne. En variante, le volant est relié à la couronne et la machine électrique au planétaire.

L'expression « comportant un » est synonyme de « comportant au moins un ».

## Revendications

1. Système électromécanique de récupération d'énergie cinétique pour véhicule (10), comportant :
- une première liaison mécanique vers les roues (30) du véhicule,
- une deuxième liaison mécanique vers un volant d'inertie (11),
- une troisième liaison mécanique vers une machine électrique réversible moteur/générateur (12),
- au moins deux trains épicycloïdaux de raisons différentes, dont les planétaires, couronnes et porte satellites sont sélectivement connectés auxdites liaisons par un système de couplage, en fonction des flux de puissance entre les roues du véhicule, le volant d'inertie et la machine électrique,
le système étant **caractérisé en ce que** :
- soit le volant (11) est connecté au planétaire des trains épicycloïdaux, et la sortie (23) vers les roues au porte-satellites (50),
- soit le volant (11) est connecté à la couronne (60) des trains épicycloïdaux, et la sortie vers les roues (30) au porte-satellites (50) et le système de couplage (70) est disposé entre la machine électrique (12) et les trains épicycloïdaux, notamment leurs planétaires (41a, 42a).

2. Système selon la revendication 1, la machine électrique réversible étant deux quadrants.

3. Système selon la revendication 1, la machine électrique réversible étant quatre quadrants.

4. Système selon l'une quelconque des revendications 1 à 3, comportant trois trains épicycloïdaux de raisons différentes.

5. Système selon la revendication 4, les raisons suivant une progression arithmétique.

6. Système selon la revendication 4, les raisons suivant une progression géométrique.

7. Système selon la revendication 4, les raisons suivant une progression arithmético-géométrique.

8. Système selon l'une quelconque des revendications précédentes, le système de couplage (70) inversant lors du passage d'un train précédemment sélectionné à un autre train nouvellement sélectionné la vitesse de rotation de la connexion vers la machine électrique (12).

9. Système selon l'une quelconque des revendications précédentes, comportant au moins deux trains épicycloïdaux, de préférence au moins trois, le passage d'un train à l'autre s'accompagnant d'un changement de signe du couple exercé par la machine électrique.

10. Véhicule équipé d'un système selon l'une quelconque des revendications 1 à 9.

11. Procédé de fourniture d'énergie aux roues d'un véhicule, utilisant un système tel que défini dans l'une quelconque des revendications 1 à 9, dans lequel, successivement :
a) l'énergie cinétique du volant est déchargée pour générer un flux de puissance à la fois vers les roues et vers la machine électrique, qui fonctionne en génératrice,
b) l'énergie cinétique du volant est déchargée vers les roues, et une énergie d'appoint est fournie par la machine électrique, qui fonctionne en moteur,
c) la raison est modifiée en changeant de train épicycloïdal en agissant sur le système de couplage,
d) l'énergie cinétique du volant est déchargée pour générer un flux de puissance à la fois vers les roues et vers la machine électrique, qui fonctionne en génératrice, et
e) l'énergie cinétique du volant est déchargée vers les roues, et une énergie d'appoint est fournie par la machine électrique, qui fonctionne en moteur.

12. Procédé selon la revendication 11, dans lequel entre les étapes b) et c) le couple de la machine électrique est inversé par voie électronique, les étapes a) à e) étant de préférence répétées, avec à chaque fois entre les étapes b) et c) un changement du couple de la machine par voie électronique.

## Patentansprüche

1. Elektromechanisches System zur Rückgewinnung kinetischer Energie für ein Fahrzeug (10), umfassend:
- eine erste mechanische Verbindung zu den Rädern (30) des Fahrzeugs,
- eine zweite mechanische Verbindung zu einem Schwungrad (11),
- eine dritte mechanische Verbindung zu einer reversiblen elektrischen Generator-Motor-Maschine (12),
- mindestens zwei Planetengetriebe mit unterschiedlichen Übersetzungsverhältnissen, wovon die Planetenräder, Zahnkränze und Satellitenträger in Abhängigkeit von den Leistungsflüssen zwischen den Rädern des Fahrzeugs, dem Schwungrad und der elektrischen Maschine durch ein Kupplungssystem selektiv an die Verbindungen angeschlossen sind,
wobei das System **dadurch gekennzeichnet ist, dass**:
- entweder das Schwungrad (11) an dem Planetenrad der Planetengetriebe und der Ausgang (23) zu den Rädern an dem Satellitenträger (50) angeschlossen ist
- oder das Schwungrad (11) an dem Zahnkranz (60) der Planetengetriebe und der Ausgang zu den Rädern (30) an dem Satellitenträger (50) angeschlossen ist und das Kupplungssystem (70) zwischen der elektrischen Maschine (12) und den Planetengetrieben, insbesondere ihren Planetenrädern (41a, 42a), angeordnet ist.

2. System nach Anspruch 1, wobei die reversible elektrische Maschine eine Zweiquadranten-Maschine ist.

3. System nach Anspruch 1, wobei die reversible elektrische Maschine eine Vierquadranten-Maschine ist.

4. System nach einem der Ansprüche 1 bis 3, umfassend drei Planetengetriebe mit unterschiedlichen Übersetzungsverhältnissen.

5. System nach Anspruch 4, wobei die Übersetzungsverhältnisse einer arithmetischen Progression folgen.

6. System nach Anspruch 4, wobei die Übersetzungsverhältnisse einer geometrischen Progression folgen.

7. System nach Anspruch 4, wobei die Übersetzungsverhältnisse einer arithmetischgeometrischen Progression folgen.

8. System nach einem der vorhergehenden Ansprüche, wobei das Kupplungssystem (70) die Drehgeschwindigkeit der Verbindung zu der elektrischen Maschine (12) beim Übergang von einem zuvor gewählten Planetengetriebe zu einem anderen, neu gewählten Planetengetriebe umkehrt.

9. System nach einem der vorhergehenden Ansprüche, umfassend mindestens zwei, vorzugsweise mindestens drei Planetengetriebe, wobei der Übergang von einem Planetengetriebe zu dem anderen von einem Vorzeichenwechsel des Drehmoments, das von der elektrischen Maschine ausgeübt wird, begleitet ist.

10. Fahrzeug, das mit einem System nach einem der Ansprüche 1 bis 9 ausgestattet ist.

11. Verfahren zum Zuführen von Energie zu den Rädern eines Fahrzeugs unter Verwendung eines Systems wie in einem der Ansprüche 1 bis 9 definiert, wobei nacheinander:
a) die kinetische Energie des Schwungrades entladen wird, um einen Leistungsfluss gleichzeitig zu den Rädern und zu der elektrischen Maschine zu erzeugen, die als Generator fungiert,
b) die kinetische Energie des Schwungrades zu den Rädern entladen wird und eine Zusatzenergie durch die elektrische Maschine zugeführt wird, die als Motor fungiert,
c) das Übersetzungsverhältnis modifiziert wird, indem das Planetengetriebe geändert wird, indem auf das Kupplungssystem eingewirkt wird,
d) die kinetische Energie des Schwungrades entladen wird, um einen Leistungsfluss gleichzeitig zu den Rädern und zu der elektrischen Maschine zu erzeugen, die als Generator fungiert, und
e) die kinetische Energie des Schwungrades zu den Rädern entladen wird und eine Zusatzenergie durch die elektrische Maschine zugeführt wird, die als Motor fungiert.

12. Verfahren nach Anspruch 11, wobei zwischen den Schritten b) und c) das Drehmoment der elektrischen Maschine auf elektronischem Weg umgekehrt wird, wobei die Schritte a) bis e) mit einem Ändern des Drehmoments der elektrischen Maschine auf elektronischem Weg jedes Mal zwischen den Schritten b) und c) vorzugsweise wiederholt werden.

## Claims

1. Electromechanical system for harvesting kinetic energy for a vehicle (10), comprising:
- a first mechanical link to the wheels (30) of the vehicle,
- a second mechanical link to an inertia flywheel (11),
- a third mechanical link to a motor/generator reversible electrical machine (12),
- at least two planetary gearsets of different ratios, of which the sun gears, crown rings and planet carriers are selectively connected to said links by a coupling system, as a function of the power flows between the wheels of the vehicle, the inertia flywheel and the electrical machine,
the system being **characterized in that**:
- either the flywheel (11) is connected to the sun gear of the planetary gearsets, and the output (23) to the wheels is connected to the planet carrier (50),
- or the flywheel (11) is connected to the crown ring (60) of the planetary gearsets, and the output to the wheels (30) is connected to the planet carrier (50) and the coupling system (70) is arranged between the electrical machine (12) and the planetary gearsets, in particular their sun gears (41a, 42a).

2. System according to Claim 1, the reversible electrical machine being two quadrants.

3. System according to Claim 1, the reversible electrical machine being four quadrants.

4. System according to any one of Claims 1 to 3, comprising three planetary gearsets of different ratios.

5. System according to Claim 4, the ratios following an arithmetic progression.

6. System according to Claim 4, the ratios following a geometric progression.

7. System according to Claim 4, the ratios following an arithmetic-geometric progression.

8. System according to any one of the preceding claims, the coupling system (70) reversing, upon the switch from a previously selected gearset to a newly selected other gearset, the speed of rotation of the connection to the electrical machine (12).

9. System according to any one of the preceding claims, comprising at least two planetary gearsets, preferably at least three, the switch from one gearset to the other being accompanied by a change of sign of the torque exerted by the electrical machine.

10. Vehicle equipped with a system according to any one of Claims 1 to 9.

11. Method for supplying energy to the wheels of a vehicle, using a system as defined in any one of Claims 1 to 9, in which, in succession:
a) the kinetic energy of the flywheel is discharged to generate a power flow both to the wheels and to the electrical machine, which operates in generator mode,
b) the kinetic energy of the flywheel is discharged to the wheels, and a top-up energy is supplied by the electrical machine, which operates in motor mode,
c) the ratio is modified by changing the planetary gearset by acting on the coupling system,
d) the kinetic energy of the flywheel is discharged to generate a power flow both to the wheels and to the electrical machine, which operates in generator mode, and
e) the kinetic energy of the flywheel is discharged to the wheels, and a top-up energy is supplied by the electrical machine, which operates in motor mode.

12. Method according to Claim 11, in which, between the steps b) and c), the torque of the electrical machine is reversed by electronic means, the steps a) to e) being preferably repeated, with, each time, between the steps b) and c), a change of the torque of the machine by electronic means.
